# EUROPEAN PATENT SPECIFICATION

(11) **EP 0 416 288 B1**
(45) Date of publication and mention of the grant of the patent: **13.03.1996**
(21) Application number: 90114857.7
(22) Date of filing: 02.08.1990
(51) Int. Cl.: C08G 63/91, C08G 63/183, C08G 63/20

(54) **Reduction of acidity of polyesters by melt reaction endcapping**
Verminderung der Azidität von Polyestern durch Verkappung der Endgruppen durch Reaktion in der Schmelze
Réduction de l'acidité des polyesters par blocage des groupements terminaux par réaction à l'état fondu

(30) Priority: 05.09.1989 US 402578
(43) Date of publication of application: 13.03.1991
(73) Proprietor: BRIDGESTONE/FIRESTONE, INC., Akron, Ohio 44317 (US)
(72) Inventor: Hergenrother, William L., Akron, Ohio 44313 (US); Doshak, John M., Mogadore, Ohio 44260 (US)
(74) Representative: Kraus, Walter, Dr.

(56) References cited:
- EP-A- 0 030 350
- CH-A- 593 309
- DE-A- 2 920 641
- GB-A- 896 711
- GB-A- 1 126 915
- US-A- 3 869 427
- US-A- 3 959 215

## Description

Polyesters utilized in fiber formation are generally produced by a heated reaction of one or more dibasic acids such as terephthalic acid, with one or more polyhydroxy compounds such as ethylene glycol, propylene glycol, 1,4-cyclohexane dimethanol, until a product of desired viscosity is obtained. The formed polyesters are characterized in that they contain both terminal hydroxy and carboxy groups. Terminal hydroxy groups are generally more predominant due to the incorporation of an excess of polyol in the reactive mixture.

Polyesters are of great importance in the manufacture of tire cords, and as reinforcement for belts, hoses and many other useful articles. In many of these commercial applications the presence of excessive carboxyl groups in the polymer molecule is detrimental.

Previous attempts at acid group reduction in polyesters have resulted in a loss of average molecular weight in the polyester product due to substantial cleavage in the polyester backbone.

DE-OS 29 20 641 discloses (example 5, samples 1145-82-E/F and 1145-82-E) a polyethylene terephthalate resin (PET) composition having below 10 equivalents of CO₂H per 10⁶ g of polymer comprising the reaction product of a carboxyl group containing PET having an acid content greater than 10 equivalents of CO₂H per 10⁶ g of polymer (see example 5, samples 1262-23-A, 1262-23-C and 1262-45-G which possess after treating with ethylene oxide, which reduces the acid content of the polymer, an acid number greater than 10 equivalents CO₂H per 10⁶ g polymer; consequently the PET starting material possess an acid content greater than those samples treated with ethylene oxide) and ethylene oxide.

CH-PS 593 309 discloses (examples 1 and 2) a polyethylene terephthalate resin (PET) composition having below 10 equivalents of CO₂H per 10⁶ g of polymer comprising the reaction product of a carboxyl group containing PET having an acid content greater than 10 equivalents of CO₂H per 10⁶ g of polymer and ethylene oxide.

GB-PS 1 126 915 discloses (example 1 and column 2, lines 82-84) melt reacting a carboxyl group containing polyester with ethylene oxide as endcapping agent in an amount of 38 millimoles per minute (or 22 millimoles per 100 g of polyester feed) at a temperature of 285°C.

It is the objective of the instant invention to provide improved polyester materials, in which the pendant carboxyl groups are either greatly reduced in number or are completely removed, without producing water as a byproduct and while maintaining the molecular weight of the polyesters having reduced sensitivity to water.

The instant invention relates to melt reaction of a carboxyl group containing polyester with a carboxyl group reactive endcapping agent selected from alkylacetylacetates; to provide a polyester having a substantially reduced number or no carboxyl group while maintaining the approximate molecular weight of the carboxyl group containing polyester precursor.

In the practice of the present invention the polyester material is first produced in any state-of-the-art commercial manner. A typical process for production of a polyester is the heated reaction of a basic difunctional organic acid with a polyol, preferably a diol, optionally together with any other desired components.

Suitable polyesters for treatment in the instant invention are prepared from difunctional organic acids including, but not limited to: terephthalic acid, 1,5-,1,4-, or 2, 6-naphthalic acid, 4,4'-dicarboxydiphenyl, and the like. Suitable polyols are preferably diols such as, but not limited to, ethylene glycol, propylene glycol, and butylene glycol. The preferred polyesters of the instant invention are homopolyesters such as polyethylene terephthalate, poly-1,4-cyclohexylenedimethylene terephthalate, polyethylene-2, 6-naphthalate, polyester ethers such as polyethylene hydroxybenzoate, poly-p-phenylene bis-hydroxyethoxy-benzoate, poly-p-phenylene bis-hydroxyethoxy-terephthalate; copolyesters or copolyester ethers which comprise mainly ethylene terephthalate units or tetramethylene terephthalate units and other copolymer components such as tetramethylene or ethylene isophthalate, 1,4-cyclohexylenedimethylene terephthalate units, or tetramethylene or ethylene p-hydroxybenzoate units . The preferred polyester for treatment in the instant invention is polyethylene terephthalate. Polyesters for treatment in the instant invention have an acid value ranging from 40 to 10 equivalents of CO₂H per 10⁶gm of polyester. Polyesters for treatment in the instant invention should have an average molecular weight ranging from 10,000 to about 60,000.

In the practice of the instant invention a formed polyester is melt reacted with a carboxy reactive group or endcapping agent selected from alkylacetylacetates, in which the alkyl groups are lower alkyl radicals. The use of these endcapping agents permits the treated polyesters to retain their approximate molecular weight and viscosity as significant amounts of water which would promote polymer degradation are not generated during endcapping reaction.

The alkylacetylacetates which are utilized in the instant invention are methyl-, ethyl-, propyl-, butyl-, pentyl- or hexyl acetylacetate, preferably methylacetylacetate. This capping compound reacts with the polyester carboxyl end group to form a polyester having an ester group and by-products of acetone and carbon dioxide. The alkylacetylacetates are represented by formula (II) and the endcapping reaction is displayed in reaction (2). 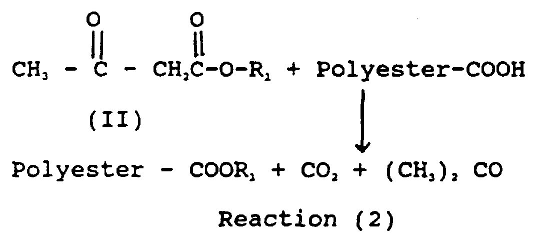 wherein R₁ represents a C₁-C₆ alkyl group.

In the process of the present invention the melt extrusion reaction of the polyester and the appropriate endcapping agent should occur in a temperature range between 270°C and 320°C. The endcapping agent feed rate into the melt extruder should range between 1 and 50 millimoles per minute per 100 grams per minute of polyester feed. The reaction residence time of the polyester and the endcapping agent in the melt reaction must be at least 10 seconds to provide for substantial endcapping of the carboxyl groups present on the untreated polyester which is fed into the melt reactor. This residence time allows for endcapping of the acid group thereby effecting acid number reduction of the polyester to an acid number below 10 equivalents of CO₂H per 10⁶gm of polyester, preferably below 3 eq. CO₂H/10⁶gm of polyester.

The polyesters produced in accordance with the instant procedure having less than 10 equivalents of CO₂H per 10⁶ grams of polymer are accorded the status of having substantially all of their carboxyl groups endcapped.

The following are specific examples for each of the endcapping agents and their use in capping the free carboxyl groups in polyesters. In all of the following examples the treated polyester is polyethylene terephthalate.

In each of the following examples the polyethyleneterephthalate (PET) melt was prepared as follows. Tire cord grade PET was continuously prepared from terephthalic acid and ethylene glycol to give an intrinsic viscosity, [η], of 0.94 dl/gm at 25°C in 1:1 ratio of phenol:tetrachloroethane. The PET in chip form was dried at 110°C for at least twelve hours in a rotary dryer under a vacuum of 133 Pa (1.0 mm of Hg). The recovered dry PET polymer was transferred to an Acrison No. 1015Z-C feeder under a nitrogen atmosphere and fed to a Werner-Pfleiider ZSK-30 twin screw compounding extruder which had all zones heated to either 280°C or 300°C. At a polymer feed rate of 40 gm/min or 100 gm/min the PET polymer had a melt residence time of 85 or 35 seconds, respectively, in the extruder.

### REFERENCE EXAMPLE 1

The compounding extruder zones were heated to 280°C and the feed rate of the PET polymer was 100 gm/min. During the PET melt residence time of about 35 seconds the last part of zone one of the compounding extruder was continuously injected with 10.4 millimoles (mM)/min of the capping agents 2-ethyl-2-oxazoline using a BIF microfeeder No. 1180-07 piston pump. The extruded polymer was cooled, chopped and analyzed to display an intrinsic viscosity [η] = 0.86 dl/gm and 0.0 eq CO₂H/10⁶ gm of PET polymer.

In comparison, a control PET polymer passing through the compounding extruder without the added 2-ethyl-oxazoline displayed [η] = 0.90 dl/gm and 23.6 eq.CO₂H/10⁶ gm of polymer.

### EXAMPLE 1

In accordance with the procedure of Referential Example 1, PET was melt extruded and methylacetylacetate was substituted as the capping agent. At a PET feed rate of 40 gm/min methylacetylacetate was injected at .062 cc/min (0.58 millieq/min) to produce a recovered carboxy capped PET polymer displaying an [η] = 0.78 dl/gm and 1.1 eq CO₂H/10⁶gm. The results of this test run and 3 others are displayed in Table 1.

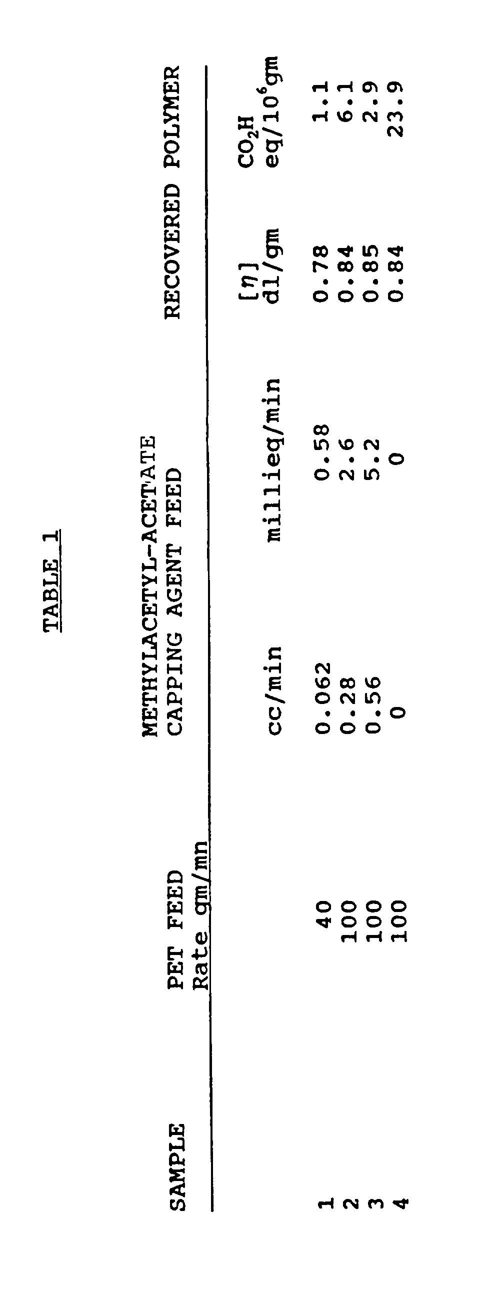

## Claims

1. A method for reducing the acidity of polyesters to an acid content below 10 equivalents of CO₂H per 10⁶ gm of polyester which comprises melt reacting a carboxyl group containing polyester having an acid value ranging from 40 to 10 equivalents of CO₂H per 10⁶ gm of polyester with an endcapping agent of the formula
CH₃COCH₂COOR₁
wherein R₁ is a C₁-C₆ alkyl radical;
in an amount ranging from 1 to 50 millimoles per minute for each 100 grams per minute of polyester feed at a temperature in the range of 270°C to 320°C.

2. The method according to claim 1 wherein the melt reaction of the polyester with the endcapping agent occurs for a period of time of at least 10 seconds.

3. The method of claim 1 wherein the carboxyl group containing polyester is polyethylene terephthalate.

4. The method of claim 1 wherein the endcapping agent is methylacetylacetate.

5. A polyethylene terephthalate resin composition having an acid number below 10 equivalents of CO₂H per 10⁶ grams of polymer comprised of the reaction product of a carboxyl group containing polyethylene terephthalate resin having an acid content greater than 10 equivalents of CO₂H per 10⁶ grams of polymer and a carboxyl group reactive endcapping agent of the formula
CH₃COCH₂COOR₁
wherein R₁ is a C₁-C₆ alkyl radical.

6. The polyethylene terephthalate resin composition of claim 5 wherein the endcapping agent is methylacetylacetate.

## Patentansprüche

1. Verfahren zur Verminderung der Azidität von Polyestern auf einen Säuregehalt von unterhalb 10 Äquivalenten CO₂H pro 10⁶ g Polyester, umfassend die Schmelzumsetzung eines Carboxylgruppen-enthaltenden Polyesters mit einer Säurezahl im Bereich von 40 bis 10 Äquivalenten CO₂H pro 10⁶ g Polyester mit einem Endverkappungsmittel der Formel
CH₃COCH₂COOR₁,
worin R₁ für einen C₁-C₆-Alkylrest steht,
in einer Menge im Bereich von 1 bis 50 mmol pro Minute, bezogen auf jeweils 100 g pro Minute Polyesterbeschickung, bei einer Temperatur im Bereich von 270°C bis 320°C.

2. Verfahren nach Anspruch 1, dadurch **gekennzeichnet**, daß die Schmelzumsetzung des Polyesters mit dem Endverkappungsmittel über einen Zeitraum von mindestens 10 Sekunden erfolgt.

3. Verfahren nach Anspruch 1, dadurch **gekennzeichnet**, daß der Carboxylgruppen-enthaltende Polyester Polyethylenterephthalat ist.

4. Verfahren nach Anspruch 1, dadurch **gekennzeichnet**, daß das Endverkappungsmittel Methylacetylacetat ist.

5. Polyethylenterephthalat-Harzmasse mit einer Säurezahl von unterhalb 10 Äquivalenten CO₂H pro 10⁶ g Polymerem, umfassend das Umsetzungsprodukt von einem Carboxylgruppen-enthaltenden Polyethylenterephthalatharz mit einem Säuregehalt von größer als 10 Äquivalenten CO₂H pro 10⁶ g Polymerem mit einem Carboxylgruppen-reaktiven Endverkappungsmittel der Formel
CH₃COCH₂COOR₁
worin R₁ für einen C₁-C₆-Alkylrest steht.

6. Polyethylenterephthalat-Harzmasse nach Anspruch 5, dadurch **gekennzeichnet**, daß das Endverkappungsmittel Methylacetylacetat ist.

## Revendications

1. Procédé pour réduire l'acidité de polyesters à une teneur en acide inférieure à 10 équivalents de CO₂H par 10⁶ g de polyester, qui comprend la réaction à l'état fondu d'un polyester contenant des groupes carboxyle ayant un indice d'acide compris dans la plage de 40 à 10 équivalents de CO₂H par 10⁶ g de polyester avec un agent de blocage terminal de formule
CH₃COCH₂COOR₁
dans laquelle R₁ est un radical alkyle en C₁ à C₆ ;
en une quantité allant de 1 à 50 millimoles par minute pour chaque fraction de 100 grammes par minute de charge de polyester à une température comprise dans la plage de 270 à 320°C.

2. Procédé suivant la revendication 1, dans lequel la réaction à l'état fondu du polyester avec l'agent de blocage terminal est conduite pendant une durée d'au moins 10 secondes.

3. Procédé suivant la revendication 1, dans lequel le polyester contenant des groupes carboxyle est un polytéréphtalate d'éthylène.

4. Procédé suivant la revendication 1, dans lequel l'agent de blocage terminal est l'acétylacétate de méthyle.

5. Composition de résine de polytéréphtalate d'éthylène ayant un indice d'acide inférieur à 10 équivalents de CO₂H par 10⁶ g de polymère, constituée du produit de réaction d'une résine de polytéréphtalate d'éthylène contenant des groupes carboxyle ayant une teneur en acide supérieure à 10 équivalents de CO₂H par 10⁶ g de polymère et d'un agent de blocage terminal réactif vis-à-vis de groupes carboxyle, de formule
CH₃COCH₂COOR₁
dans laquelle R₁ est un radical alkyle en C₁ à C₆.

6. Composition de résine de polytéréphtalate d'éthylène suivant la revendication 5, dans laquelle l'agent de blocage terminal est l'acétylacétate de méthyle.
